# DEMANDE DE BREVET EUROPEEN

(11) **EP 4 574 326 A1**
(43) Date de publication de la demande: **25.06.2025**
(21) Numéro de dépôt: 24221526.7
(22) Date de dépôt: 19.12.2024
(51) Int. Cl.: B23K 20/12, B23K 20/233, B23K 101/04, B23K 101/36, B23K 103/10

(54) **OUTIL DE SOUDAGE PAR FRICTION-MALAXAGE COMPRENANT UN PION AMÉLIORÉ**

(30) Priorité: 22.12.2023 FR 2315122
(71) Demandeur: Institut Maupertuis, 35170 Bruz (FR)
(72) Inventeur: GUILLO, Mario, 35136 ST-JACQUES DE LA LANDE (FR)
(74) Mandataire: Regimbeau

(57) **Abrégé**

Le présent exposé concerne un pion (8) de soudage par friction-malaxage, le pion (8) présentant :
- au moins un filet (81) ;
- au moins une rainure (82) transversale au filet ; et
- au moins un méplat (83) entamant le filet.

## Description

### DOMAINE TECHNIQUE

Le présent exposé concerne le soudage par friction-malaxage.

### ETAT DE LA TECHNIQUE

Le soudage par friction-malaxage (connu sous l'acronyme anglosaxon « *FSW* » pour *Friction Stir Welding*) est employé depuis plusieurs années pour souder des pièces mécaniques. La soudure est créée par l'intermédiaire d'un outil de soudage comprenant un pion et un épaulement, tournant ou statique selon les configurations de soudage choisies (notamment selon les matériaux, les épaisseurs et la cadence requise) et la qualité de soudure souhaitée. Le pion est en rotation et pénètre dans les pièces à souder. Quant à la face de l'épaulement, elle est mise en contact avec les pièces à souder. Ensuite, l'outil est animé d'un mouvement d'avance suivant la ligne de joint à réaliser entre les pièces. Ce procédé est notamment avantageux pour un alliage à bas point de fusion, par exemple un alliage d'aluminium, car il ne provoque pas sa fusion. On contourne ainsi des problématiques de porosités et de fissuration à chaud, inhérentes au soudage par fusion des alliages, notamment des alliages d'aluminium.

Or, le malaxage mis en oeuvre par le pion peut engendrer des défauts dans la soudure qui viennent réduire la zone de liaison entre les pièces à quelques millimètres, voire quelques dixièmes de millimètres. Les performances mécaniques de la soudure sont alors réduites. Une autre conséquence de ces défauts est l'apparition d'amorces de fissuration qui fragilisent la soudure jusqu'à provoquer sa rupture prématurée dans certains cas.

### EXPOSE GENERAL

Un but du présent exposé est donc d'améliorer le soudage par friction-malaxage.

À cet effet, selon un premier aspect du présent exposé, il est proposé un pion de soudage par friction-malaxage,
le pion présentant :
- au moins un filet ;
- au moins une rainure transversale au filet ; et
- au moins un méplat entamant le filet.

Ainsi, cette géométrie de pion permet de réduire de manière importante les défauts engendrés par le malaxage, voire de les supprimer. La zone de liaison est donc augmentée et la qualité de la soudure améliorée. Elle permet en outre de réaliser des soudures pour de larges plages de paramètres de soudage. On parle alors de géométrie universelle du pion.

Par exemple, la soudure peut être réalisée à une vitesse de rotation élevée du pion, tout en ayant une vitesse d'avance faible de l'outil. En effet, sans cette géométrie particulière, ces gammes de valeurs pour le soudage n'étaient pas envisagées car elles étaient propices à l'apparition de ces défauts.

Il peut être prévu que la rainure et le méplat forment un motif périodique se répétant autour du pion.

Il peut être prévu que le pion présente une portion de forme générale tronconique, le méplat, le filet et la rainure s'étendant sur la portion tronconique.

Il peut être prévu en outre qu'un angle maximal entre un axe principal du pion et une enveloppe circonscrite au pion est compris entre 4° et 20°, de préférence égal à 8°.

Il peut être prévu que le filet s'étend sur au moins un tour du pion.

Il peut être prévu que le filet présente un pas inférieur ou égal à 1,2 mm.

Il peut être prévu que le pion présente plusieurs filets.

Il peut être prévu que la rainure est inclinée par rapport à l'axe principal du pion.

Il peut être prévu que la rainure parcourt le pion autour de l'axe principal du pion dans un sens opposé au filet.

Il peut être prévu que la rainure s'étend en hélicoïde autour du pion.

Il peut être prévu qu'une profondeur de la rainure est supérieure ou égale à une profondeur du filet.

Il peut être prévu que le pion présente plusieurs rainures réparties autour du pion.

Il peut être prévu que le pion présente trois rainures, notamment hélicoïdales, régulièrement disposées autour de l'axe principal du pion.

Il peut être prévu que le pion présente plusieurs méplats.

Il peut être prévu que les méplats sont répartis autour du pion.

Il peut être prévu qu'au moins deux des méplats sont coplanaires.

Il peut être prévu qu'une extrémité libre du pion est plane.

Il peut être prévu qu'une extrémité libre du pion est convexe.

Il peut être prévu qu'une extrémité libre du pion forme un poinçon.

Selon un deuxième aspect du présent exposé, il est proposé un outil de soudage par friction-malaxage,
l'outil comprenant :
- un pion conforme au premier aspect ; et
- un corps présentant un épaulement entourant le pion.

Il peut être prévu que le pion est monté mobile en rotation par rapport à l'épaulement.

Selon un troisième aspect du présent exposé, il est proposé une électrobroche comprenant :
- un bâti ; et
- un outil conforme au deuxième aspect,
l'outil étant monté sur une extrémité libre du bâti.

Selon un quatrième aspect, il est proposé un procédé de soudage de pièces par friction-malaxage, le procédé étant mis en oeuvre par un pion conforme au premier aspect.

Il peut être prévu que le procédé est appliqué à des pièces superposées l'une sur l'autre.

Il peut être prévu que le procédé est appliqué à deux pièces, les deux pièces étant en même temps superposées l'une sur l'autre et juxtaposées champ contre champ.

Selon un cinquième aspect, il est proposé un ensemble comprenant des pièces soudées, l'ensemble résultant de la mise en oeuvre d'un procédé selon le quatrième aspect.

Selon un sixième aspect, il est proposé un bac de batteries comprenant au moins une peau et au moins un profilé creux,
une soudure de la peau au profilé résultant d'une mise en oeuvre d'un procédé selon le quatrième aspect.

### DESCRIPTION DES FIGURES

D'autres caractéristiques, buts et avantages ressortiront de la description qui suit, qui est purement illustrative et non limitative, et qui doit être lue en regard des dessins annexés sur lesquels :
la figure 1 illustre schématiquement une électrobroche de soudage par friction-malaxage montée sur un robot ;
la figure 2 est une vue en élévation d'un outil de friction-malaxage monté sur une électrobroche de soudage par friction-malaxage ;
la figure 3a illustre en perspective un pion présentant une géométrie améliorée ;
la figure 3b est une vue en coupe radiale du pion de la figure 3a ;
la figure 3c est une vue schématique en coupe longitudinale du pion de la figure 3a ;
les figures 4a et 4b sont des vues schématiques en perspective d'outils de friction-malaxage avec un épaulement statique ;
les figures 5a et 5b illustrent schématiquement des outils de friction-malaxage ;
la figure 6 est un organigramme illustrant un mode de mise en oeuvre d'un procédé de soudage de pièces par friction-malaxage ;
la figure 7a, la figure 7b, la figure 7c, la figure 7d, la figure 7e et la figure 7f illustrent schématiquement plusieurs modes de réalisation d'un soudage par friction-malaxage ;
la figure 8 illustre schématiquement une partie d'un aéronef ;
la figure 9a, la figure 9b et la figure 9c illustrent schématiquement plusieurs modes de réalisation d'un soudage de pièces d'un aéronef par friction-malaxage ;
la figure 10 illustre schématiquement une configuration de soudage d'une peau en aluminium sur un profilé en aluminium creux typique d'un bac de batteries de véhicule électrique ; et
la figure 11a et la figure 11b sont des photographies d'une soudure d'un bac de batteries obtenue par friction-malaxage ;
la figure 12 et la figure 13 sont des métallographies de pièces soudées par friction-malaxage sans amélioration géométrique du pion ;
la figure 14 est une photographie d'une soudure obtenue par un outil de friction-malaxage à épaulement mobile ;
la figure 15, la figure 16, la figure 17a, la figure 17b, la figure 17c et la figure 18a sont des métallographies de pièces soudées par friction-malaxage avec amélioration géométrique du pion ;
la figure 18b et la figure 18c sont des vues rapprochées de la figure 18a ;
la figure 19 et la figure 20 sont respectivement une photographie et une métallographie d'une soudure obtenue par un outil de friction-malaxage à épaulement fixe et à pion amélioré géométriquement ; et
la figure 21a et la figure 21b sont des métallographies d'une soudure obtenue par un outil de friction-malaxage avec amélioration géométrique du pion, épaulement fixe et sélection d'un angle maximal de cône.

### DESCRIPTION DETAILLEE

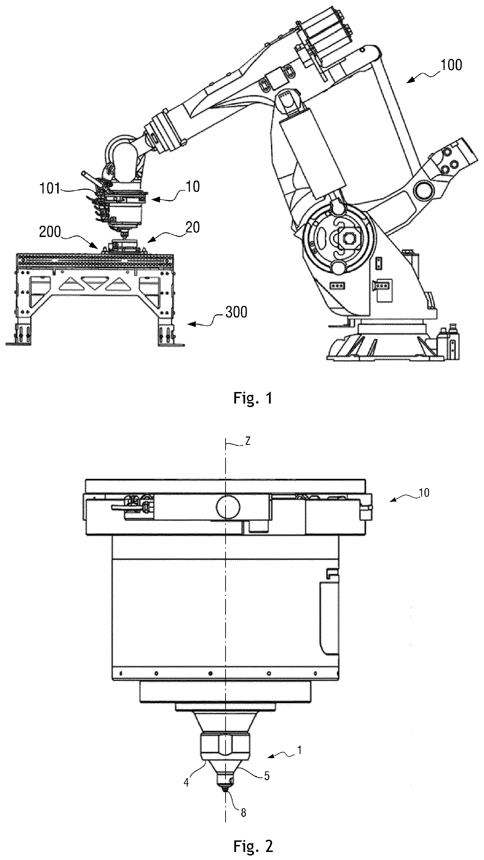

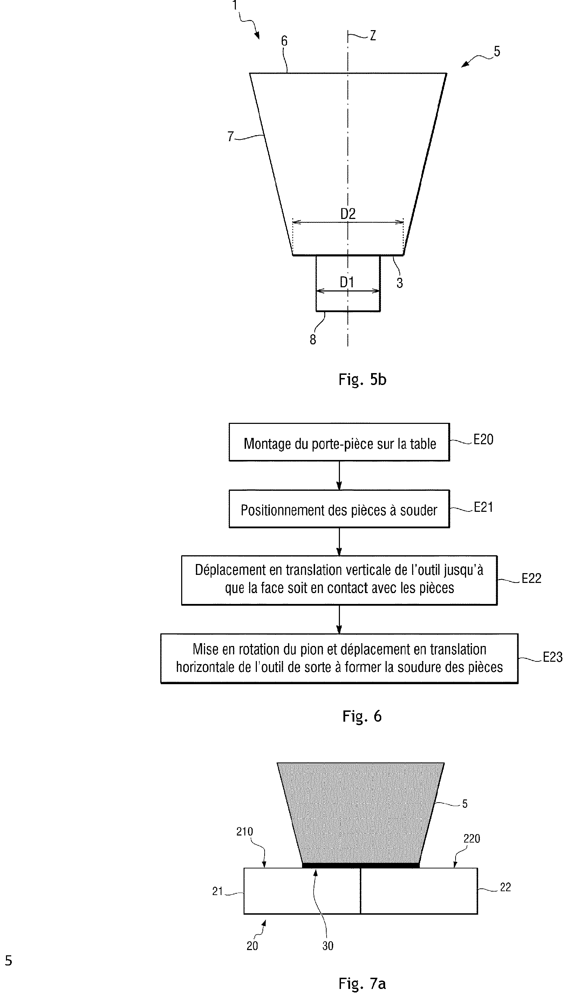

On a illustré à titre d'exemple en figure 1 un robot industriel 100 destiné à se déplacer dans un espace de travail pour souder des pièces 21, 22 d'un ensemble 20. L'ensemble 20 est par ailleurs illustré à titre d'exemple à la figure 7a. Le robot comprend au moins un bras monté sur au moins un axe. Dans la présente demande, chaque axe correspond à un degré de liberté du robot. Dans l'exemple de réalisation illustré en figure 1, le robot 100 comprend six axes. Le robot comprend en outre une extrémité libre 101 configurée pour recevoir une broche, de préférence une électrobroche 10 pour réaliser l'opération de soudage. Bien entendu l'électrobroche 10 peut être montée sur un autre dispositif, par exemple une machine-outil, pour réaliser le soudage.

Les pièces 21, 22 sont montées dans un outillage 200 fixé à une table 300. Selon un exemple de réalisation, notamment illustré en figure 1, l'outillage 200 est mis et maintenu en position sur la table 300, typiquement par des vis le rendant solidaire à la table 300. L'outillage 200 comprend en outre des moyens de serrage des pièces 21, 22. Selon un exemple de réalisation, l'outillage 200 comprend des brides de serrage configurés pour maintenir immobiles les pièces 21, 22 durant l'opération de soudage friction-malaxage.

Le soudage est mis en oeuvre par friction-malaxage. Pour ce faire, l'électrobroche 10 comprend un outil 1 de friction-malaxage, illustré notamment à la figure 2, monté sur une extrémité libre 4 de l'électrobroche 10. L'électrobroche 10 est connue d'une personne du métier et ne sera donc pas détaillée d'avantage. On pourra se référer au document FR-3 122 110 qui décrit un exemple d'électrobroche 10.

L'outil 1 de friction-malaxage comprend un pion 8 tournant, c'est-à-dire monté mobile en rotation autour d'un axe longitudinal Z de l'électrobroche.

On convient ici qu'un plan axial est un plan parallèle à l'axe longitudinal Z et passant par ce dernier et un plan radial est un plan orthogonal à l'axe longitudinal Z. Une circonférence s'entend comme un cercle appartenant à un plan radial et dont le centre appartient à l'axe longitudinal Z. Un plan circonférentiel est un plan tangent à une circonférence.

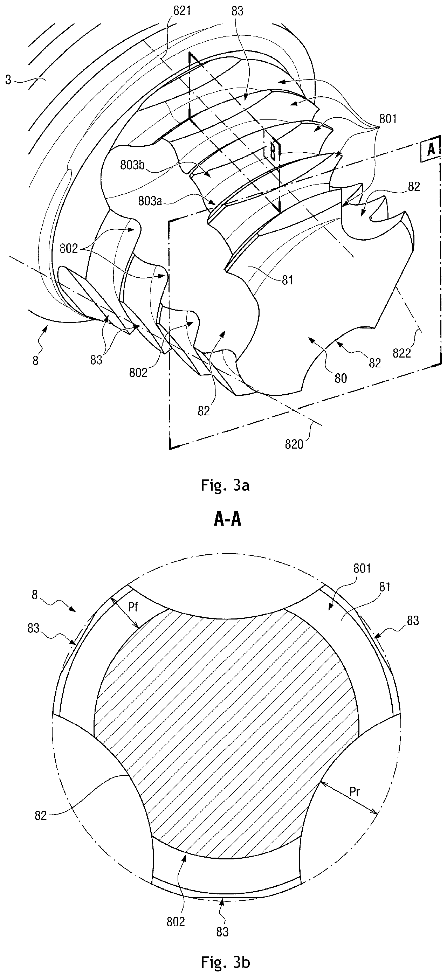

On a illustré en détail un exemple de pion 8 en figure 3a.

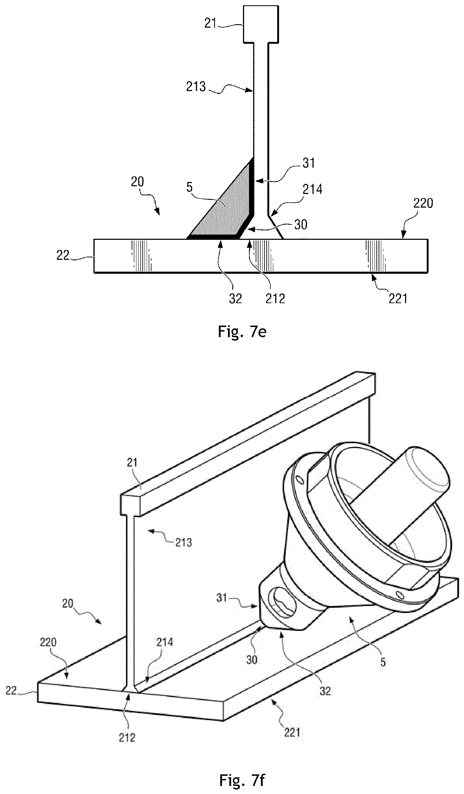

Dans cet exemple, le pion 8 est de forme générale tronconique, c'est-à-dire qu'une enveloppe circonscrite au pion 8 présente un diamètre le long de l'axe longitudinal Z, mesuré perpendiculairement à l'axe longitudinal Z, qui est non constant et qui, en l'espèce, diminue à mesure qu'on se déplace vers une extrémité libre 80 du pion 8. Afin de faciliter la pénétration du pion 8 dans les pièces, un angle maximal de cône mesuré entre l'axe Z et une génératrice de l'enveloppe peut en outre être compris entre 4° et 20°. Cette plage de valeur est également choisie pour que l'outil 1 n'entre pas en collision avec les pièces lors du soudage pour la configuration illustrée en figure 7e qui sera détaillée plus loin dans la description. En outre, pour maximiser la zone de liaison des pièces, l'angle de cône peut de préférence être égal à 8°. En variante, le pion 8 peut être de forme générale cylindrique. C'est-à-dire qu'une enveloppe circonscrite au pion 8 présente un diamètre constant le long de l'axe longitudinal Z, mesuré perpendiculairement à l'axe longitudinal Z. Le pion 8 peut également présenter une forme générale cylindrique sur une portion axiale et tronconique sur une autre portion axiale. En l'espèce, l'extrémité libre 80 est plane, et s'étend dans un plan radial au pion 8. L'extrémité libre 80 peut avoir une autre forme, en particulier convexe, notamment bombée, afin de réduire les efforts de soudage et faciliter son insertion dans la matière. Pour encore davantage faciliter son insertion, la convexité de l'extrémité libre 80 peut être accentuée au point que l'extrémité libre 80 forme un poinçon sur le pion 8.

Le pion 8 présente en outre un filet 81 s'étendant le long de l'axe longitudinal autour du pion 8, en l'espèce sur plusieurs tours, intégralement ou partiellement. Ainsi, le filet 81 permet au pion de brasser la matière malaxée jusqu'à l'extrémité libre 80. Dans la présente demande, le filet 81 est défini comme un motif présentant une arête 801, plus communément appelée un sommet du filet 81, et un creux 802, plus communément appelé un fond du filet 81, s'étendant en hélicoïde autour du pion. Ainsi, dans n'importe quel plan axial passant par le pion 8, le filet 81 présente une variation périodique de portions de sommet et de portions de creux. Bien entendu, le filet n'est pas limité à une typologie particulière et peut présenter toute forme connue, par exemple métrique, trapézoïdale (l'arête et le creux sont de forme générale en trapèze), rond (l'arête et le creux sont de forme générale arrondie), gaz, voire en dent de scie.

Le pion 8 peut en outre présenter plusieurs filets et se succédant le long du pion 8. Autrement dit, les arêtes de chaque filet peuvent mutuellement se suivre de sorte à former une hélice continue ou bien discontinue en décalant chaque filet le long de l'axe Z. Le nombre de tours du filet peut varier d'un pion à l'autre. Autrement dit, le filet 81 peut présenter une ou plusieurs spires. Une valeur du pas du filet 81, c'est-à-dire une distance maximale prise entre deux flancs 803a, 803b de l'arête 801 en regard, est de préférence inférieure ou égale à 1,2 mm. En variante, le pion 8 peut présenter plusieurs filets se succédant autour du pion 8, chacun des filets s'étendant sur moins d'un tour du pion 8.

Le pion 8 présente en outre trois rainures 82 régulièrement disposées autour de l'axe Z. Autrement dit, les rainures 82 sont réparties autour du pion 8 par isométrie. C'est-à-dire que les rainures 82 sont mutuellement espacées par un angle constant autour du pion 8. En l'espèce l'angle 120° car il y a trois rainures. Mais il peut prendre d'autres valeurs, par exemple 180° pour deux rainures ou 90° pour quatre rainures. On parle également de répétition circulaire des rainures 82 autour du pion 8. On dit aussi que les rainures 82 sont réparties autour du pion 8 par isométrie dans un plan radial passant par le pion 8. Chaque rainure 81 parcourt le pion 8 autour de l'axe Z dans un sens opposé au filet 81 dans le présent exemple. Ainsi, les rainures permettent un brassage supplémentaire qui s'oppose à celui du filet lors du malaxage par le pion 8. Le brassage est alors encore amélioré. Le pion 8 peut présenter moins de trois rainures 82 ou plus de trois rainures 82, voire une seule rainure 82. Chaque rainure 82 est transversale au filet et est inclinée. Les rainures sont toutes rectilignes mais peuvent en variante être toutes hélicoïdales, ou bien chaque rainure peut être sélectivement rectiligne ou hélicoïdale. Elles peuvent également présenter d'autres formes. Les rainures 82 présentent en outre une profondeur Pr supérieure ou égale à une profondeur du filet Pf (voir la figure 3b).

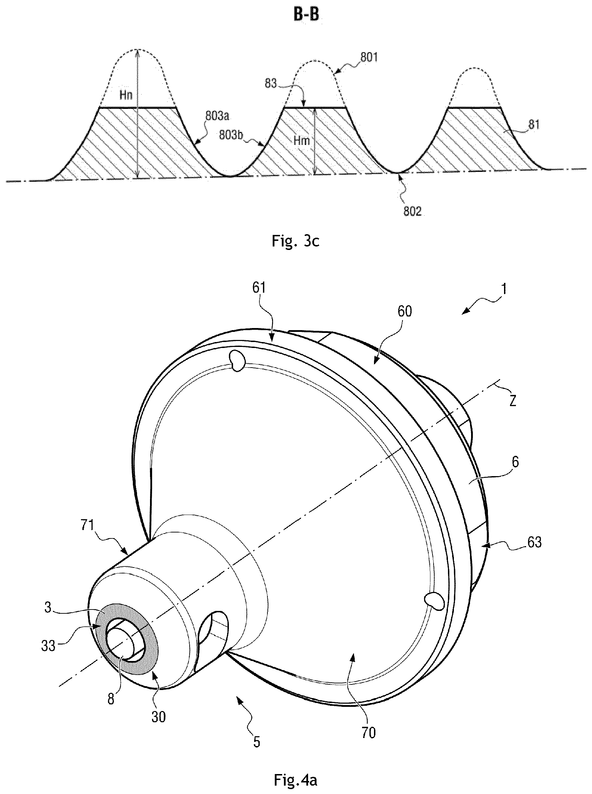

Le pion 8 présente également des méplats 83. Chaque méplat 83 s'étend partiellement sur le filet 81, ici dans un plan circonférentiel traversant le filet 81. Les méplats 83 entament le filet 81 car une hauteur Hm, prise dans un plan axial entre une base du creux 802 et le méplat 83, est inférieure à une hauteur nominale Hn prise dans le même plan axial entre la base du creux 802 et un sommet de l'arête 801 (figure 3c). Les méplats 83 ont pour effet d'accentuer l'effet de brassage par les rainures 82 et le filet 81. Les méplats 83 sont régulièrement disposés autour du pion 8 entre les rainures 82. C'est-à-dire que les méplats 83 sont mutuellement espacés dans le plan radial par un angle constant. En l'espèce l'angle 120° car il y a trois méplats. Mais il peut prendre d'autres valeurs, par exemple 180° pour deux méplats ou 90° pour quatre méplats. On parle également de répétition circulaire des méplats 83 autour du pion 8. De plus, puisqu'ils sont entre les rainures 82 qui sont elles-mêmes régulièrement disposées autour du pion 8, les méplats 83 sont décalés angulairement par rapport aux rainures 82. Les rainures 82 et les méplats 83 se répètent donc périodiquement autour du pion 8.

Dans le présent exemple, les méplats 83 sont disposés le long de trois lignes 820, 821, 822 comprises dans des plans circonférentiels non coplanaires. Bien entendu, les méplats 83 peuvent être disposés sur plus de trois lignes, moins de trois lignes, voire sur une seule ligne. Sur chaque ligne, le pion 8 présente quatre méplats 83. Il peut également présenter plus de quatre méplats, ou moins de quatre méplats. Les méplats 83 sont régulièrement espacés sur chaque ligne. Autrement dit, ils sont images l'un de l'autre par homothétie de même rapport. Le rapport d'homothétie peut également varier d'une ligne à l'autre, par exemple pour disposer les méplats 83 en quinconce autour du pion 8. En variante, les méplats 83 peuvent être régulièrement disposés autour du pion 8 sur une circonférence. Autrement dit, les méplats 83 sont répartis autour du pion 8 par isométrie dans un plan radial passant par le pion 8.

L'outil 1 de friction-malaxage comprend en outre un corps 5 distinct du pion 8. Le corps 5 peut être monté fixe par rapport au pion 8. Le corps 5 comprend une base 6 et un épaulement 3. La base 6 est montée sur l'électrobroche 10 et l'épaulement 3 est configuré pour être en contact avec les pièces 21, 22 lors du soudage. Le corps 5 est délimité axialement depuis la base 6 jusqu'à l'épaulement 3 et radialement par une face latérale 7 s'étendant autour de l'axe longitudinal Z. L'épaulement 3 entoure le pion 8 et présente un diamètre D2 supérieur à un diamètre D1 du pion 8. Ainsi, l'épaulement forme une variation de section transversale entre le corps 5 et le pion 8.

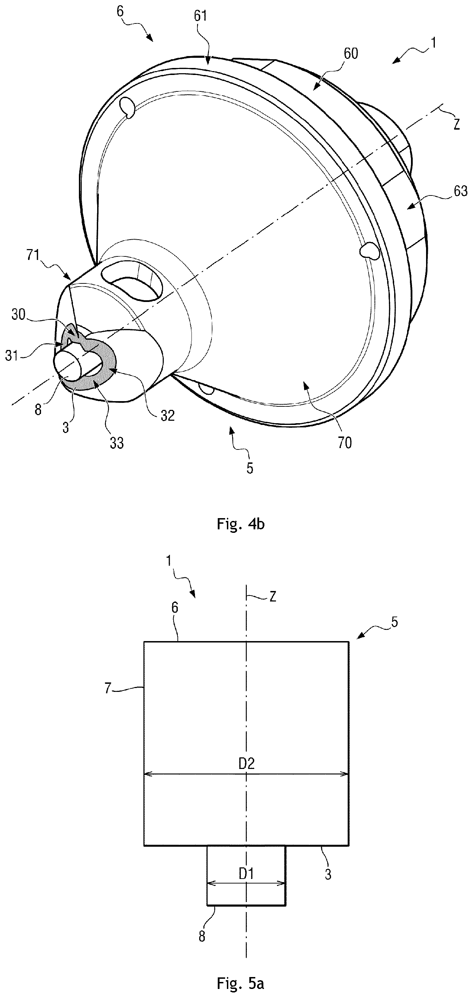

Selon un exemple de réalisation du corps 5, notamment illustré aux figures 4a et 4b, la base 6 du corps 5 présente une première section cylindrique 60 et une deuxième section cylindrique 61 présentant un diamètre supérieur au diamètre de la première section cylindrique 60. La première section cylindrique 60 comprend des méplats 63 configurés pour bloquer en rotation le corps 5 dans l'électrobroche 10. Ainsi, lors d'un montage du corps 5 sur l'électrobroche 10, le corps 5 est mis en position avec l'électrobroche 10 par un centrage sur la première section 60 et un appui plan sur la deuxième section 61. Le corps 5 est maintenu en position par un moyen de serrage permettant de rendre solidaire le corps 5 avec l'électrobroche 10.

Selon un exemple de réalisation de la face latérale 7, notamment illustré en figure 5a, la face latérale 7 est cylindrique. Elle présente un diamètre D2 constant le long de l'axe longitudinal Z, mesuré perpendiculairement à l'axe longitudinal Z. En variante, la face latérale 7 peut être non cylindrique. Elle est par exemple tronconique comme illustré à titre d'exemple en figure 5b. Elle présente un diamètre D2 mesuré perpendiculairement à l'axe qui est non constant et qui, en l'espèce, diminue à mesure qu'on se déplace en direction du pion. La face latérale 7 peut également être non cylindrique sur une première portion 70 et cylindrique sur une deuxième portion 71. Elle est par exemple tronconique sur la première portion 70 comme illustré à titre d'exemple en figure 4a et en figure 4b.

Le pion 8 peut être monté mobile par rapport à l'épaulement 3 qui est alors dit fixe, par exemple en assemblant l'épaulement 3 à une embase de l'électrobroche 10. Ainsi, l'outil 1 est plus robuste grâce à l'épaulement fixe 3. De plus, la soudure 23 présente une meilleure qualité de surface. Elle est donc plus résistante. En outre, l'outil 1 soude plus rapidement. Une cadence de l'outil 1 est donc améliorée. En variante, le pion 8 peut être monté en étant fixé rigidement à l'épaulement 3 par exemple en assemblant le pion 8 et l'épaulement 3 à un même axe de rotation de l'électrobroche 10.

Ainsi, le pion 8 s'étend en saillie de l'épaulement 3. Le filet 81 et les rainures 82 s'étendent alors au maximum jusqu'à l'épaulement 3. Quant aux méplats 83, ils peuvent être disposés entre l'épaulement 3 et l'extrémité libre 80.

L'épaulement 3 présente au moins une face d'extrémité axiale 30 de forme générale plane et configurée pour être en contact avec la surface des pièces 21, 22 à souder.

La face d'extrémité axiale 30 peut présenter une autre forme. Par exemple, une jonction entre la face d'extrémité axiale 30 et la face latérale peut être arrondie ou chanfreinée. La face 30 peut avoir une forme concave.

Grâce à l'épaulement fixe, on peut particulièrement bien adapter la forme de l'épaulement à la forme et à la configuration des pièces que l'on doit souder. Cet épaulement constitue alors une « contreforme » du plan de joint et contient la matière en cours de soudage (voir par exemple à ce sujet le mode de réalisation des figures 7e et 7f décrit plus loin.) Pour chaque configuration de soudage particulière, il est possible d'adapter la forme de l'épaulement à celle du joint que l'on veut réaliser.

Le dispositif portant l'outil 1, par exemple le robot précité, est configuré pour déplacer l'outil en translation verticale, afin de mettre en contact la face d'extrémité axiale 30, typiquement plane, avec une portion des pièces 21, 22, et en translation horizontale, afin de faire progresser l'outil le long des pièces à souder. Ainsi, lors du soudage, notamment lorsque l'épaulement est fixe, la face 30 glisse sur la portion des pièces 21, 22 et en même temps, le pion 8 animé d'un mouvement de rotation autour de l'axe longitudinal chauffe et malaxe le plan de joint, pour créer une soudure 23 des pièces 21, 22. La face 30 permet alors de contenir la matière durant l'opération de soudage.

L'épaulement 3 peut comprendre en outre plusieurs faces d'extrémité axiale, notamment planes, non coplanaires 30, 31, 32. Ainsi, il est possible de réaliser la soudure 23 entre des pièces s'étendant angulairement, par exemple perpendiculairement ou en présentant un angle inférieur à 90°, tel que 70°, l'une par rapport à l'autre.

Selon un exemple de réalisation, notamment illustré en figure 4b, la face 3 est décomposée en une première face d'extrémité axiale 30 qui s'étend dans un plan radial d'extrémité et deux autres faces planes 31, 32 qui s'étendent symétriquement l'une de l'autre par rapport au plan axial donnant lieu à deux plans obliques distincts depuis la face 30. En variante, les deux autres faces planes 31, 32 s'étendent asymétriquement l'une de l'autre par rapport au plan axial pour souder des pièces ne s'étendant pas perpendiculairement mais en présentant un angle inférieur à 90°, par exemple 70°.

Un mode de mise en oeuvre d'un procédé de soudage d'une première pièce 21 et d'une deuxième pièce 22 d'un ensemble 20 est décrit en référence à la figure 6.

Le procédé de soudage est mis en oeuvre par l'outil 1 du présent exposé.

Dans le cas d'un outillage 200 amovible, l'outillage 200 est fixé sur une table 300 au cours d'une étape E20. Selon un exemple de mise en oeuvre de l'étape E20, l'outillage 200 est mis et maintenu en position sur la table 300, typiquement par des vis. Alternativement, l'outillage fait partie de la table 300. L'outillage 200 est alors déjà monté sur la table 300.

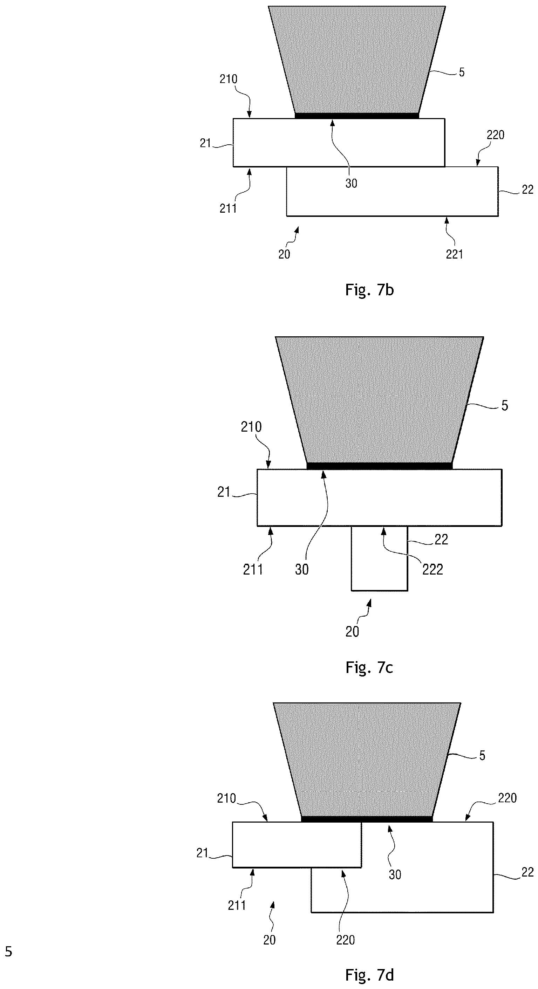

Au cours d'une étape E21, les pièces 21, 22 à souder sont mises en position dans l'outillage 200 puis maintenues en position par des moyens de fixation, par exemple des brides de serrage mises en place dans l'outillage 200. Les pièces 21, 22 peuvent être mises en position selon différentes configurations :
- en juxtaposition champ contre champ (figure 7a), les pièces 21, 22 ayant alors des faces principales coplanaires 210, 220 ;
- superposées l'une sur l'autre parallèlement (figure 7b), l'une des pièces 21 s'étendant alors au-dessus de l'autre pièce 22. La face principale inférieure 211 de la pièce supérieure 21 est en contact surfacique avec la face principale supérieure 220 de la pièce inférieure 22 ; ou
- superposées l'une sur l'autre angulairement, par exemple perpendiculairement ou en présentant un angle inférieur à 90° tel que 70°, ou encore face contre champ (figures 7c, 7e et 7f), l'une des pièces 21 s'étendant au-dessus de l'autre pièce 22, la face principale inférieure 211 de la pièce supérieure 21 étant en contact surfacique avec un champ 222 de la pièce inférieure 22 (figure 7c) ou bien un champ 212 de la pièce supérieure 21 étant en contact avec la face principale supérieure 220 de la pièce inférieure 22 (figure 7e et 7f). Les faces principales 220, 221 de cette dernière sont perpendiculaires à celles de la pièce supérieure 21.

Bien entendu, il est également possible de mélanger les configurations. Par exemple les pièces 21, 22 peuvent être en même temps superposées l'une sur l'autre et juxtaposées champ contre champ (figure 7d). Dès lors, la pièce supérieure 21 est épaulée contre la pièce inférieure 22 en faisant coïncider simultanément leurs champs et la face principale inférieure 211 de la pièce supérieure 21 avec l'une des faces supérieures 220 de la pièce inférieure 22.

Au cours d'une étape E22, l'outil 1 est déplacé en translation verticale jusqu'à mettre en contact la face d'extrémité 30 avec au moins l'une des première et deuxième pièces 21, 22.

En juxtaposition, la face d'extrémité 30 est en contact avec les deux pièces 21, 22 simultanément. En superposition, l'outil 1 peut être en contact avec l'une des pièces 21, 22 ou les deux. Selon un exemple de réalisation, notamment illustré en figure 7b, les pièces sont superposées l'une sur l'autre parallèlement et la face d'extrémité 30 est en contact avec la face principale supérieure 210 de la pièce supérieure 21.

Selon un autre exemple de réalisation, notamment illustré en figure 7c, l'une des pièces 21 s'étend perpendiculairement au-dessus de l'autre pièce 22, la face principale inférieure 211 de la pièce supérieure 21 étant en contact surfacique avec un champ 222 de la pièce inférieure 22. Ainsi, la face d'extrémité 30 est en contact avec la face principale supérieure 210 de la pièce supérieure 21.

En variante, notamment illustrée aux figures 7e et 7f, la pièce supérieure 21 présente une portion principale plane 213, ayant des faces principales s'étendent parallèlement, et une bordure évasée 214 dans laquelle les faces principales s'éloignent à mesure qu'on se rapproche du champ. Ce champ 212 de la pièce supérieure 21 est en contact avec la face principale supérieure 220 de la pièce inférieure 22. Ainsi :
- la face d'extrémité axiale 30 et la première face oblique 31 de l'épaulement 3 sont respectivement en contact avec la bordure 214 et une face plane de la partie principale 213 de la pièce supérieure 21 ; et
- la deuxième face oblique 32 de l'épaulement 3 est en contact avec la face principale supérieure de la pièce inférieure 22.

L'outil 1 est prêt à souder. Au cours d'une étape E23, le pion 8 est mis en rotation et l'outil 1 est déplacé dans une direction, typiquement horizontale, pour suivre une ligne de joint de sorte à réaliser une passe et former la soudure 23 des première et deuxième pièces 21, 22. Plusieurs passes peuvent être réalisées pour former la soudure 23, typiquement deux passes.

En juxtaposition, dont un exemple est notamment illustré en figure 7a, et lorsque les configurations sont mélangées, par exemple lorsque les pièces 21, 22 sont en même temps superposées l'une sur l'autre et juxtaposées champ contre champ (figure 7d), la face d'extrémité 30 passe simultanément sur les faces principales coplanaires 210, 220 des pièces 21, 22.

Dans le cas où les pièces 21, 22 sont superposées l'une sur l'autre parallèlement, configuration dont un exemple est notamment illustré en figure 7b, la face d'extrémité 30 passe sur la face principale externe 210 de la pièce supérieure 21 et soude les deux pièces l'une à l'autre.

Dans le cas où l'une des pièces 21 s'étend angulairement au-dessus de l'autre pièce 22, par exemple perpendiculairement dans un exemple illustré en figure 7c ou en présentant un angle inférieur à 90° tel que 70°, la face principale inférieure 211 de la pièce supérieure 21 étant contact surfacique avec un champ 222 de la pièce inférieure 22, la face d'extrémité 30 passe sur la face principale supérieure 210 de la pièce supérieure. En variante, notamment illustrée à titre d'exemple en figure 7e et 7f, le champ 212 de la pièce supérieure 21 peut être en contact avec la face principale supérieure 220 de la pièce inférieure 22, la face d'extrémité 30 passe sur la face principale 214 de la pièce supérieure 21 et les faces obliques 31, 32 passent respectivement sur la face principale 213 de la pièce supérieure 21 et la face principale supérieure 220 de la pièce inférieure 22.

Les pièces 21, 22 sont alors soudées. Les étapes E20 à E23 peuvent être répétées jusqu'à que l'ensemble 20 soit entièrement soudé. Par conséquent, l'ensemble 20 comprend alors au moins deux pièces.

Dans ce qui suit, nous détaillons deux applications concrètes du procédé de soudage.

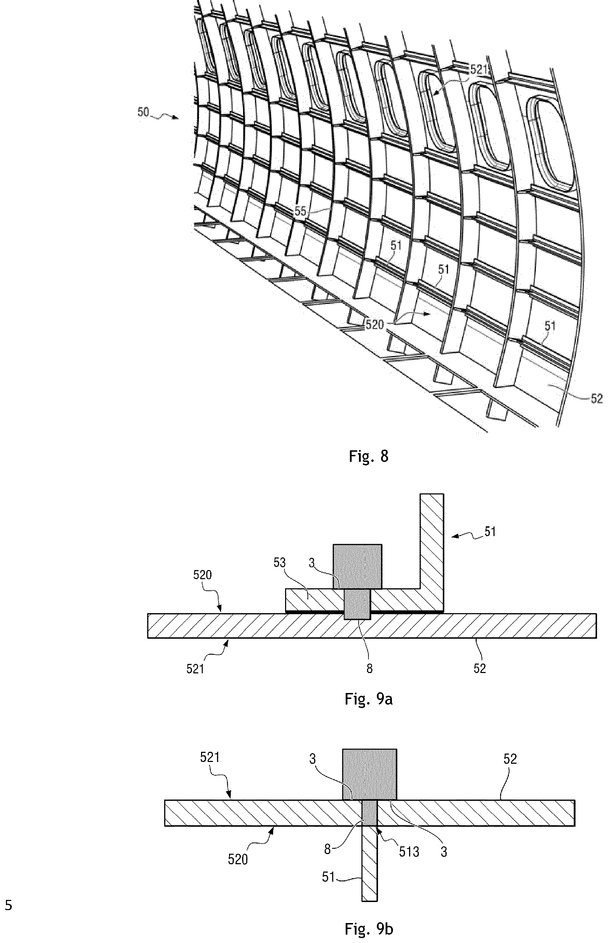

On a illustré à la figure 8 un fuselage d'aéronef. Il comprend des lisses 51 s'étendant suivant une direction longitudinale du fuselage, des cadres 55 s'étendant dans une direction transversale du fuselage, et une peau 52 recouvrant les lisses 51 et cadres 55. Les cadres 55 et lisses 51 agissent ici comme des raidisseurs de la peau 52 du fuselage.

À des fins de concision, cadres 55 et lisses 51 seront nommés raidisseurs dans la suite de cette description.

Les raidisseurs s'étendent donc sur une face interne 520 de la peau 52, une face externe 521 de la peau 52 étant libre et opposée aux raidisseurs. La peau et chaque raidisseur sont soudés l'un à l'autre par le procédé de soudage mis en oeuvre par l'outil 1. Il n'est donc pas nécessaire de les fixer l'un à l'autre au moyen d'un assemblage par des organes de fixation rapportés. Ainsi, la masse de l'aéronef 50 est réduite et le rendement de l'aéronef 50 est amélioré. L'aéronef 50 est également assemblé plus rapidement.

Selon un premier exemple de réalisation, notamment illustré en figure 9a, le raidisseur a une forme profilée en coin et comprend une semelle 53, la semelle 53 étant soudée en superposition sur la peau de fuselage 52. Le soudage a lieu avec la face d'extrémité axiale 30 en contact avec la semelle 53, du côté du raidisseur 51, 55 opposé à la peau 52.

Selon un deuxième exemple de réalisation, notamment illustré en figure 9b, le raidisseur 51, 55 est soudé en superposition sur la peau de fuselage 52 et l'outil est cette fois en contact avec la peau de fuselage 52 lors du soudage, en s'étendant sur la face externe 521 de la peau, opposée au raidisseur 51, 55. Un champ du raidisseur 513 est en contact avec la face interne 520 de la peau 52.

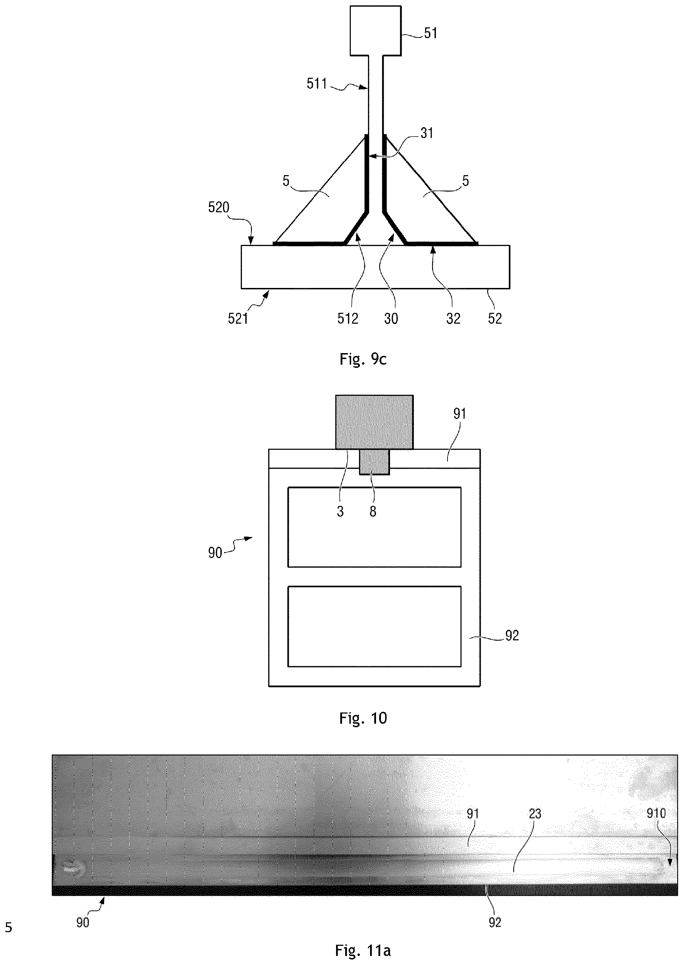

Selon un troisième exemple de réalisation, notamment illustré en figure 9c, le raidisseur 51, 55 est soudé en superposition sur la peau de fuselage 52 et l'outil est en contact à la fois avec la peau de fuselage 52 et le raidisseur 51, 55 lors du soudage. Le soudage a lieu depuis la face interne 520 et non visible de la peau représentant un avantage considérable par rapport à la configuration de la figure 9b. Le soudage a lieu dans la configuration des figures 7e et 7f. Les faces obliques 31, 32 de l'épaulement 3 viennent en contact à la fois avec la face principale du raidisseur 511 et la face principale interne 520 de la peau 52 et la face d'extrémité 30 de la face 3 est en contact avec la portion 512 du raidisseur 51, 55. L'outil 1 réalise donc la soudure en passant simultanément sur les portions planes 511, 512 du raidisseur 51, 55 ainsi que la face interne 520 de la peau 52, par exemple à gauche sur la figure 9c. Une autre passe permet de faire de même à droite. La soudure étant réalisée du côté interne de l'aéronef, une étape de finition, par exemple par usinage ou meulage de la soudure 23, est alors supprimée. Il n'y a plus non plus besoin de semelle 53, ce qui réduit le poids de l'ensemble.

Le procédé de soudage mis en oeuvre par l'outil 1 du présent exposé permet également d'obtenir un ensemble 90 présentant une structure soudée creuse et illustrée à la figure 10. Cette architecture est typique des bacs à batteries en aluminium utilisés dans les véhicules électriques et consistant à souder un élément de peau 91 sur un profilé en aluminium creux 92. Le profilé creux 92 permet de gagner en poids afin d'améliorer le rendement poids/puissance du véhicule électrique et de consommer moins d'énergie.

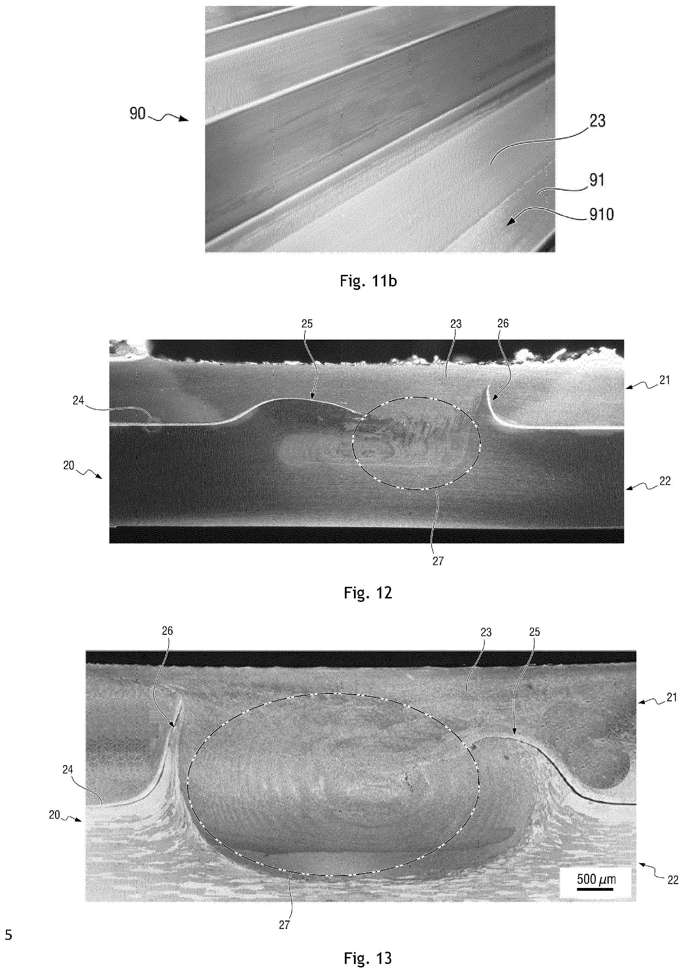

Selon un exemple de réalisation, notamment illustré aux figures 11a et 11b, l'élément de peau 91 et le profilé aluminium creux 92 sont posés l'un sur l'autre parallèlement, l'élément de peau 91 s'étendant alors au-dessus du profilé 92. La soudure 23 de la peau 91 avec le profilé 92 est alors obtenue par un passage de l'outil sur une face principale supérieure 910 de la peau 91 opposée au profilé aluminium creux 92.

Le procédé de soudage mis en oeuvre par l'outil 1 du présent exposé présente de nombreux avantages. En effet, l'ensemble 20 soudé se distingue macroscopiquement de celui obtenu par des outils de friction-malaxage connus. La soudure 23 ne présente plus de défauts à l'interface entre les pièces 21, 22. La matière mélangée des pièces 21, 22 au niveau de la soudure 23 est alors homogène. Par conséquent, la zone de liaison entre les pièces 21, 22 est augmentée. Les performances mécaniques de la soudure aussi. Les amorces de fissuration sont réduites, voire supprimées. La soudure est donc plus robuste et ne risque plus de rupture prématurée.

Dans le cas d'un épaulement fixe, la soudure 23 de l'ensemble 20 présente en outre une qualité de surface améliorée. Cela a pour effet de réduire, voire de supprimer des défauts en surface de la soudure pouvant être rencontrés dans le cas d'un épaulement tournant. Dès lors, les performances mécaniques de la soudure 23 sont encore davantage améliorées.

Ainsi, le pion 8 à géométrie améliorée et l'épaulement fixe 3 permettent en combinaison d'obtenir une soudure 23 ne présentant des défauts ni en surface ni en son sein.

### EXEMPLES

Des exemples concrets, mais nullement limitatifs, illustrant les avantages de l'amélioration géométrique du pion 8, sont détaillés dans les exemples qui suivent.

### Exemples sans amélioration géométrique du pion

La figure 12 est une coupe métallographique d'un soudage d'une première plaque 21 d'aluminium 7075 (série 7000) de 1 mm d'épaisseur 7075 sur une deuxième plaque d'aluminium 2024 (série 2000). Les plaques sont superposées l'une sur l'autre et la coupe est prise dans un plan orthogonal à la direction d'avance de l'outil 1.

On remarque sur cette figure des défauts de part et d'autre la soudure 31 sous la forme d'une vague 25 (mieux connue sous la terminologie anglosaxonne « *cold lap* ») et d'un crochet 26 (mieux connu sous la terminologie anglosaxonne « *hook* »). Ces défauts réduisent la zone de liaison 27. Elle est petite (de l'ordre de quelques millimètres, voire quelques dixièmes de millimètres) et hétérogène.

La vague 25 est provoqué par un cisaillement de la matière des plaques insuffisant pour briser totalement le plan de joint initial 24. Un manque de brassage du pion 8 est à l'origine de ce cisaillement insuffisant. Il prend la forme d'une vague de hauteur variable selon le manque de brassage.

Le crochet 26 prend la forme d'un crochet, ou d'une virgule, provoqué par le cisaillement de la matière. Le crochet engendre une remontée brutale du plan de joint 24. Dans des cas extrêmes, le crochet 26 peut être totalement vertical et remonter jusqu'à la plaque supérieure.

Ces défauts sont à l'origine d'une soudure de mauvaise qualité à l'origine de tous les inconvénients précités dans le présent exposé.

Afin de réduire ces défauts, il est possible d'agir sur les paramètres de soudage comme le montre la figure 13. En effet, la vague 25 est moins prononcé et la zone de liaison 27 est plus étendue et plus homogène. Néanmoins, le crochet 26 reste prononcé.

En particulier, en raison d'une valeur d'avance par tour (définie comme le rapport entre la vitesse d'avance de l'outil et la vitesse de rotation du pion) particulièrement faible, le crochet 26 a tendance à remonter de manière extrême. A l'inverse, la vague 25 est généralement réduite dans ces conditions (meilleur brassage). On parle alors de « paramétrie chaude ». Agir sur les paramètres de soudage afin de limiter en même temps le crochet 26 et la vague 25 est donc très complexe.

Or, cette méthode est fastidieuse car elle nécessite un nombre important d'essais de soudage et présente une robustesse faible. De plus, il est nécessaire de redéfinir les paramètres, et donc de refaire des essais, pour chaque nouvelle configuration (épaisseurs, matériaux, etc.).

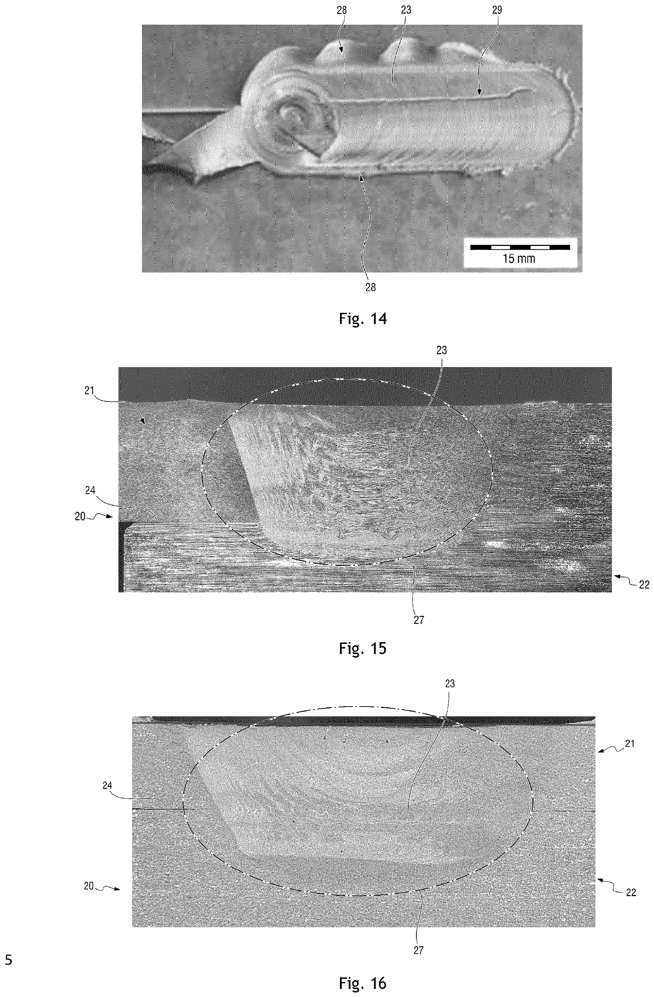

Il est possible de réduire le crochet 26 en utilisant un effort de forge (effort le long de l'axe Z lors de l'enfoncement du pion 8 dans les pièces 21, 22) plus important. En effet, il permet de réduire la remontée de l'interface. Or, utiliser un effort de plaquage plus important va engendrer des bavures 28 (visibles notamment en figure 14), appelées également « flash » de soudure en raison du relief formé par les morceaux de matière projetés qui s'agglomèrent en périphérie de la soudure lors de la rotation de l'épaulement 3, à cause d'un enfoncement accru de l'outil 1 dans les pièces 21, 22. De plus, un effort de forge plus important engendre une augmentation des contraintes dans les pièces 21, 22, et donc des déformations plus importantes réduisant la qualité de l'ensemble soudé 20. Enfin, cette gamme d'effort peut s'avérer incompatible avec l'utilisation de l'outil 1 sur le robot industriel 100 qui est généralement limité en capacité de charge.

Il est également possible de réduire la vague 25 en augmentant la vitesse de rotation du pion 8. En contrepartie, cela conduit à des flashs de soudure importants 28, voire un effondrement de soudure, ainsi que des cavités 29 (visibles notamment en figure 14) à cause d'une énergie trop importante à la surface. Augmenter la vitesse de rotation du pion 8 fait également remonter localement le plan de joint 24 et engendre donc un crochet 26 plus important.

Obtenir un compromis pour réduire ces défauts peut s'avérer fastidieux. En effet, les défauts en surface et au sein de la soudure 30 réduisent ses propriétés mécaniques. Les flashs 28 forment également des points d'amorce de corrosion des pièces 21, 22. En outre, la soudure 23 est irrégulière. En effet, comme illustré dans l'exemple en figure 14, la soudure 23 présente de nombreux reliefs en son centre, à cause des cavités 29 et en sa périphérie à cause des flashs de soudure 28.

### Exemples avec amélioration géométrique du pion

Différents essais ont été réalisés afin de mettre en évidence les avantages liés à l'amélioration géométrique du pion. Dans ces essais, différents jeux d'épaisseur et de types de matériaux des pièces sont testés. Les pièces sont également soudées pour plusieurs gammes de vitesse de rotation du pion 8 et de vitesses d'avance de l'outil 1. Ainsi, une gamme importante de valeurs d'avance par tour, définie comme le rapport entre la vitesse d'avance de l'outil 1 et la vitesse de rotation du pion 8, est testée. D'autres paramètres comme l'effort de forge varient entre les essais.

La figure 15 est une coupe métallographique d'une soudure d'un capot 21 d'aluminium 6061 T6 (série 6000) de 2 mm d'épaisseur sur un support 22 en aluminium 6061 T6 (série 6000) d'environ 10 mm. Le capot 21 et le support 22 sont soudés dans la configuration de la figure 7d et la coupe est prise dans un plan orthogonal à la direction d'avance de l'outil 1. La vitesse de rotation du pion 8 est de 3500 tr/min et la vitesse d'avance de l'outil 1 est de 100 cm/min.

La figure 16 est une coupe métallographique d'une soudure d'une feuille 21 d'aluminium 6061 T6 (série 6000) de 1 mm d'épaisseur sur une plaque 22 en aluminium 6061 T6 (série 6000) de 2 mm d'épaisseur. La feuille 21 et la plaque 22 sont soudées dans la configuration de la figure 7b et la coupe est prise dans un plan orthogonal à la direction d'avance de l'outil 1. La vitesse de rotation du pion 8 est de 3000 tr/min et la vitesse d'avance de l'outil 1 est de 48 cm/min.

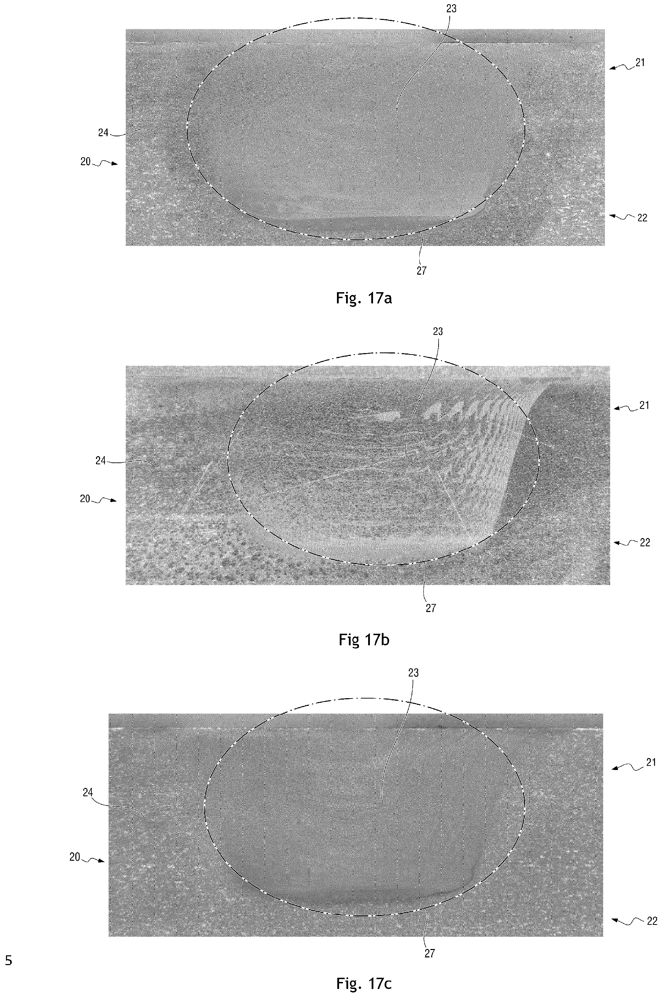

Les figures 17a, 17b et 17c sont des coupes métallographiques de plusieurs soudures d'une plaque 21 d'aluminium 6061 T6 (série 6000) de 3 mm d'épaisseur sur un support 22 en aluminium 6061 T6 (série 6000) de 15 mm d'épaisseur. Ces soudures nécessitent des efforts de forge importants. La plaque 21 et le support 22 sont soudés dans la configuration de la figure 7b et la coupe est prise dans un plan orthogonal à la direction d'avance de l'outil 1. La vitesse de rotation du pion 8 est de 3000 tr/min et la vitesse d'avance de l'outil 1 est de 78 cm/min. La figure 17a illustre une soudure 23 obtenue avec un effort de forge de 350 kg, la figure 17b 400 Kg et la figure 17c 450 kg (variation de 25 %).

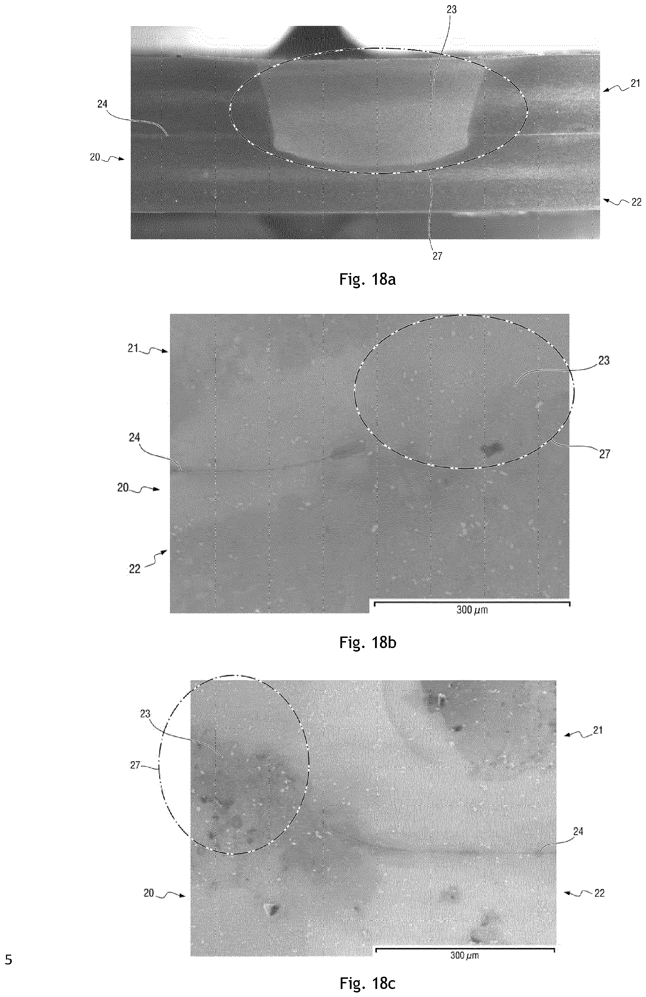

Pour se différencier des précédents essais applications qui sont sur des aluminiums de série 6000, la figures 18a est une coupe métallographique d'une soudure de deux pièces 21, 22 d'aluminium de série 2000. Les pièces 21, 22 sont soudées dans la configuration de la figure 7b et la coupe est prise dans un plan orthogonal à la direction d'avance de l'outil 1. La soudure 23 est obtenue par une double passe de soudage (un aller/retour). La matière est donc considérablement chauffée, ce qui favorise l'apparition d'un crochet important. Les figures 18b et 18c sont des vues rapprochées de la même coupe métallographique de part et d'autre de la soudure 23 au niveau du plan de joint 24.

On constate dans toutes ces configurations une absence de défauts de type crochet et vague et un contraste allant du clair au sombre dans la soudure 23 en longeant le plan de joint 24 qui témoigne d'un mélange homogène de la matière des deux pièces 21, 22. Ainsi, la zone de liaison 27 est étendue et homogène. La géométrie améliorée du pion 8 permet de supprimer les défauts au sein de la soudure 23 pour une grande plage de paramètres de soudage (vitesse de rotation du pion 8, vitesse d'avance de l'outil 1, effort de forge), pour différentes configurations de soudage et pour différentes épaisseurs de pièces.

### Exemples avec amélioration géométrique du pion et épaulement fixe

On a également réalisé une soudure 23 avec une amélioration géométrique du pion, pour ne pas avoir de défauts de type crochet et vague, ainsi qu'avec un épaulement 3 fixe.

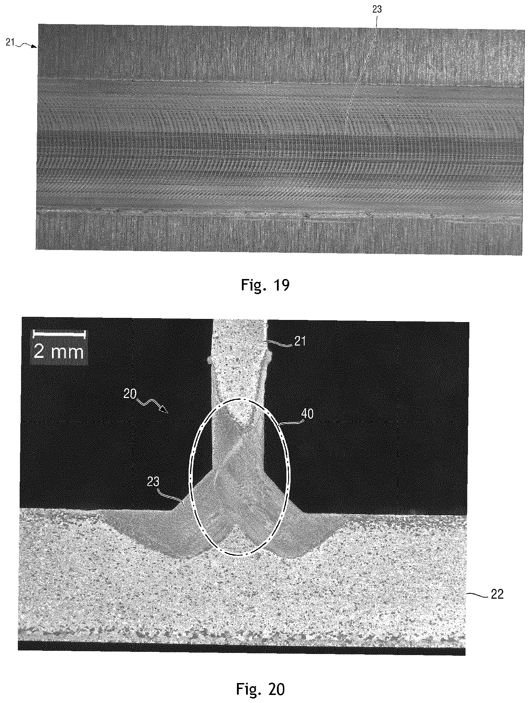

La figure 19 illustre la soudure 23 obtenue dans des conditions analogues à celles du cas illustré en figure 17b. Ici, notamment, l'effort de forge vaut 400 kg. La soudure 23 ne présente ni de flash ni de cavités.

Ainsi, grâce à l'épaulement fixe, la qualité de surface de la soudure 23 est grandement améliorée. La soudure 23 obtenue ne présente donc plus de défauts en surface et en son sein.

La figure 20 est une coupe métallographique d'une soudure 23 réalisée en deux passes et dans une configuration analogue à celle illustrée en figure 7e et la coupe est prise dans un plan orthogonal à la direction d'avance de l'outil 1. On constate sur cette figure une zone de recouvrement 40 des deux passes de la soudure. Cette zone de recouvrement permet notamment d'améliorer la robustesse de la soudure.

### Exemples avec amélioration géométrique du pion, épaulement fixe et sélection de l'angle maximal de cône

On a aussi réalisé une soudure 23 avec, comme pour la configuration précédente, une amélioration géométrique du pion et un épaulement 3 fixe. De plus, l'angle maximal de cône est choisi de sorte que la soudure 23 s'étende sur une fraction d'une épaisseur de la pièce inférieure 22. En l'espèce, l'angle maximal de cône est compris entre 0° et 24°.

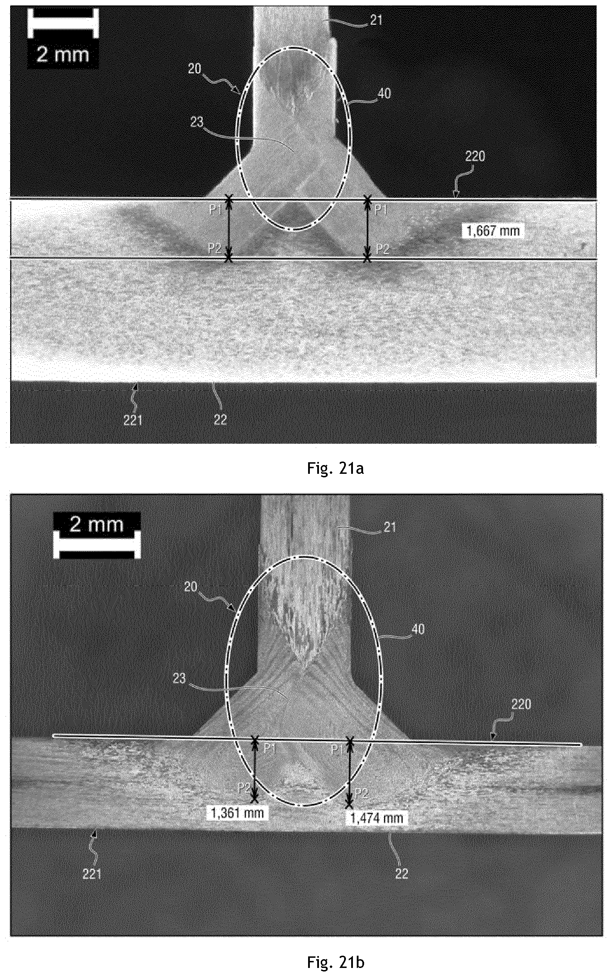

Les figures 21a et 21b sont des coupes métallographiques dans des conditions analogues à celles du cas de la figure 20. Dans le cas de la figure 21a, l'angle maximal est quelconque et la pièce inférieure fait 5 mm d'épaisseur. Dans le cas de la figure 21b, l'angle maximal est sélectionné et la pièce inférieure 22 fait 2 mm d'épaisseur. On remarque sur la figure 21a que la soudure 23 s'étend plus loin dans l'épaisseur de la pièce 22 par rapport à la soudure 23 de la figure 21b. Par ailleurs, si la pièce inférieure illustrée en figure 21a faisait 2 mm, le pion 8 pénétrerait sur quasiment la totalité de l'épaisseur de la pièce inférieure. Dans des cas extrêmes, le pion 8 peut même passer à travers la pièce inférieure lorsque l'angle maximal est quelconque.

Ainsi, le choix de l'angle maximal de cône permet de réduire la pénétration du pion 8 dans la pièce inférieure 22 afin de conserver une marge suffisante pour éviter de traverser la pièce inférieure 22. Ici, la marge est définie comme une différence minimale entre l'épaisseur de la pièce 22, mesurée perpendiculairement entre la face principale supérieure 220 et la face principale inférieure 221 ou bien donnée par le fabricant, et la pénétration de la soudure 23 mesurée perpendiculairement entre un point P1 pris sur la face principale supérieure 220 et un point P2 pris sur la soudure 23. Typiquement, la marge est comprise entre quatre et cinq dixièmes de millimètres. La marge peut par exemple être mesurée sur la métallographie par des constructions géométriques connues.

## Revendications

1. Outil (1) de soudage par friction-malaxage,
l'outil (1) s'étendant le long d'un axe longitudinal (Z),
l'outil (1) comprenant :
- un pion (8) présentant :
- au moins un filet (81) ;
- au moins une rainure (82) transversale au filet ; et
- au moins un méplat (83) entamant le filet ; et
- un corps (5) présentant un épaulement (5) entourant le pion,
le pion (8) étant monté mobile en rotation par rapport à l'épaulement (3) autour de l'axe longitudinal (Z).

2. Outil (1) selon la revendication 1, dans lequel la rainure (82) et le méplat (83) forment un motif périodique se répétant autour du pion.

3. Outil (1) selon l'une des revendications 1 ou 2, dans lequel le pion est de forme générale tronconique, le méplat (83), le filet (81) et la rainure (82) s'étendant sur la portion tronconique.

4. Outil (1) selon l'une des revendications 1 à 3, dans lequel le filet (81) s'étend sur au moins un tour du pion.

5. Outil (1) selon l'une des revendications 1 à 4, dans lequel le filet (81) présente un pas inférieur ou égal à 1,2 mm.

6. Outil (1) selon l'une des revendication 1 à 5, dans lequel le pion présente plusieurs filets (81).

7. Outil (1) selon l'une des revendications 1 à 6, dans lequel la rainure (82) est inclinée par rapport à un axe principal (Z) du pion.

8. Outil (1) selon l'une des revendications 1 à 7, dans lequel la rainure (82) parcourt le pion autour de l'axe principal (Z) du pion dans un sens opposé au filet (81).

9. Outil (1) selon l'une des revendications 1 à 8, dans lequel la rainure (82) s'étend en hélicoïde autour du pion.

10. Outil (1) selon l'une des revendications 1 à 9, dans lequel une profondeur de la rainure (Pr) est supérieure ou égale à une profondeur du filet (Pf).

11. Outil (1) selon l'une des revendications 1 à 10, dans lequel le pion présente plusieurs rainures (82) réparties autour du pion.

12. Outil (1) selon l'une des revendications 1 à 11, dans lequel le pion présente plusieurs méplats (83).

13. Outil (1) selon la revendication 12, dans lequel les méplats (83) sont répartis autour du pion.

14. Outil (1) selon l'une des revendication 12 ou 13, dans lequel au moins deux des méplats (83) sont coplanaires.

15. Outil (1) selon l'une des revendications 1 à 14, dans lequel une extrémité libre (80) du pion est plane.

16. Outil (1) selon l'une des revendications 1 à 14, dans lequel une extrémité libre (80) du pion est convexe.

17. Électrobroche (10) comprenant :
- un bâti ; et
- un outil (1) conforme à l'une des revendications 1 à 16,
l'outil étant monté sur une extrémité libre (4) du bâti.

18. Procédé de soudage de pièces (21, 22) par friction-malaxage, le procédé étant mis en oeuvre par un outil (1) conforme à l'une des revendications 1 à 16.

19. Procédé selon la revendication 18, appliqué à des pièces (21, 22) superposées l'une sur l'autre.

20. Procédé selon la revendication 18, appliqué à deux pièces (21, 22), les deux pièces étant en même temps superposées l'une sur l'autre et juxtaposées champ contre champ.

21. Ensemble (20) comprenant des pièces soudées (21, 22), l'ensemble résultant de la mise en oeuvre d'un procédé selon l'une des revendications 18 à 20.

22. Bac de batteries (90) comprenant au moins une peau (91) et au moins un profilé (92) creux,
une soudure de la peau (91) au profilé (92) résultant d'une mise en oeuvre d'un procédé selon l'une des revendications 18 à 20.
